# EUROPEAN PATENT APPLICATION

(11) **EP 4 729 921 A1**
(43) Date of publication of application: **22.04.2026**
(21) Application number: 24872877.6
(22) Date of filing: 25.09.2024
(51) Int. Cl.: G01N 15/02, G01N 15/1031, G01N 27/22, G08C 17/02, G01N 15/00

(54) **METAL PARTICLE MONITORING DEVICE AND METHOD THEREOF**

(30) Priority: 25.09.2023 KR 20230127847; 24.09.2024 KR 20240129003
(71) Applicant: LG Energy Solution, Ltd., Seoul 07335 (KR)
(72) Inventor: LEE, Seungsoo, Daejeon 34122 (KR)
(74) Representative: Goddar, Heinz J.
(86) International application number: PCT/KR2024/014434
(87) International publication number: WO 2025/071169

(57) **Abstract**

A metal particle monitoring device according to an embodiment of the present disclosure may include: a piping through which a fluid passes, a first electrostatic capacity sensor that detects metal particles in the fluid passing through the piping, a metal removal unit that is disposed on the downstream side of the first sensor and removes prescribed metal particles in the fluid, and a second electrostatic capacity sensor that is disposed on the downstream side of the metal removal unit, and detects metal particles after the prescribed metal particles are removed in the fluid.

## Description

### [TECHNICAL FIELD]

### Cross-Reference to Related Application(s)

This application claims priority to and the benefit of Korean Patent Application No. 10-2023-0127847, filed on September 25, 2023, and Korean Patent Application No. 10-2024-0129003, filed on September 24, 2024, with the Korean Intellectual Property Office, the disclosures of which are incorporated herein by reference in their entirety.

The present disclosure relates to a metal particle monitoring device and a method thereof, and more particularly, to a metal particle monitoring device that can distinguish between a ferrous metal and a nonferrous metal and a method thereof.

### [BACKGROUND]

The use of mobile devices such as cell phones, laptops, camcorders and digital cameras, and energy storage systems (ESS) has been routinized in modem society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they are freely rechargeable, have low self-discharge rates, and have high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are disposed with a separator interposed between them, and an exterior material, i.e., battery case, which hermetically houses the electrode assembly together with an electrolyte.

Such secondary batteries are widely used in not only small devices such as portable electronic devices, but also medium- and large-scale devices such as electric vehicles and energy storage systems (ESS), and the use frequency thereof is rapidly increasing. Furthermore, in recent years, there is an increasing tendency to use residential battery packs for the purpose of storing electricity.

In the manufacturing process of secondary batteries, metallic foreign substances cause many problems. Metallic foreign substances may be factors causing low voltage of the battery, and ultimately may lead to battery failure. Metallic foreign substances can be not only contained in the raw materials themselves, but also can be generated in facilities related to the manufacturing process of secondary batteries. Therefore, it is necessary to monitor the concentration of metallic foreign substances in the entire manufacturing process of secondary batteries. However, there is a problem that it is not possible to distinguish between ferrous metal foreign substance and nonferrous metal foreign substances and monitor them.

### [DETAILED DESCRIPTION OF THE INVENTION]

### [Technical Problem]

It is an object of the present disclosure to provide a metal particle monitoring device that can distinguish between a ferrous metal and a nonferrous metal and a method thereof.

However, the technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided a metal particle monitoring device comprising: a piping through which a fluid passes; a first sensor that detects metal particles in the fluid passing through the piping; a metal removal unit that is disposed on a downstream side of the first sensor and removes prescribed metal particles in the fluid; and a second sensor that is disposed on the downstream side of the metal removal unit, and detects the metal particles after the prescribed metal particles are removed in the fluid.

The first sensor and the second sensor may be electrostatic capacity sensors.

The piping comprises an opening part through which at least a part of the metal removal unit penetrates, and the metal removal unit may be detachably inserted into the piping through the opening part.

The metal removal unit may comprise a magnetic member disposed inside the piping to collect the prescribed metal particles.

The metal removal unit may further comprise a gripping member that protrudes outside the piping when the magnetic member is inserted into the piping; and a sealing member that is disposed between the gripping member and the magnetic member and seals the opening part of the piping.

The metal removal unit may further comprise a position fixing part that allows the magnetic member to be locate at the center of the piping.

The position fixing part may comprise a housing that houses the magnetic member, a cover member that closes the opening part of the piping, and a fixing member that connects between the housing and the cover member, and fixes a position of the housing.

The housing comprises a first housing and a second housing separably coupled with the first housing, wherein at least one of the first housing and the second housing may be connected to the cover member by the fixing member.

One of the first housing and the second housing may comprise a female screw part formed on an inner surface, and the other of the first housing and the second housing may comprise a male screw part formed on an outer surface and engaged with the female screw part.

The magnetic member may have a cross-sectional shape that corresponds to a shape of the piping.

The magnetic member may comprise a through hole through which the fluid passes.

The housing may have a shape corresponding to a shape of the magnetic member.

The piping comprises a housing space formed to protrude outward so that the metal removal unit can be housed therein, and a piping cover member that opens and closes the opening part, wherein the metal removal unit may be housed in the housing space and disposed inside the piping.

The metal removal unit comprises a through hole having a cross section corresponding to the cross sectional shape of the piping, and when the metal removal unit is disposed in the housing space, the fluid may pass through the through hole.

A diameter of the through hole may be smaller than or equal to a diameter of the piping.

The piping may extend in a vertical direction with respect to a ground.

The piping may extend slantly downward with respect to a ground.

The first electrostatic capacity sensor, the second electrostatic capacity sensor, and the metal removal unit may be disposed on a side of the piping that faces the ground.

The piping may comprise a spreading part having a cross-sectional shape that widens toward the metal removal unit on the downstream side of the first electrostatic capacity sensor, and a converging part having a cross-sectional shape that narrows toward the second electrostatic capacity sensor on the downstream side of the metal removal unit.

The metal removal unit comprises a plurality of metal removal units, and the plurality of metal removal units may be disposed spaced apart from each other at prescribed intervals.

The fluid may be air inside a manufacturing facility of a secondary battery.

The metal particles may be formed from at least one metal selected from iron, stainless steel, copper and zinc, or an alloy thereof.

According to another embodiment of the present disclosure, there is provided a metal particle monitoring method comprising the steps of: detecting an amount of metal particles in a fluid passing through a piping; removing prescribed metal particles in the fluid; and detecting the amount of the metal particles after the prescribed metal particles are removed in the fluid.

### [Advantageous Effects]

According to an embodiment of the present disclosure, the arrangement structure of the electrostatic capacity sensor and the metal removal unit makes it possible to distinguish between a ferrous metal and a nonferrous metal and monitor metal foreign substances, which was not possible previously. The ferrous metal and nonferrous metal foreign substances can be selectively detected to determine generation factors of foreign substance.

Also, by monitoring the metal foreign substances contained in the air inside a manufacturing facility of the secondary battery, it is possible to predict in advance defective cells that may occur in the process of manufacturing the secondary battery.

In addition, since the removal of ferrous metals is possible during the process of monitoring the metal foreign substances, reduction of metal foreign substances in the air inside the manufacturing facility of a secondary battery can be achieved more effectively.

The effects of the present disclosure are not limited to those described above, and other effects that are not described herein may clearly be understood by one of ordinary skill in the art from the appended claims.

### [BRIEF DESCRIPTION OF THE DRAWING]

FIG. 1 is a schematic diagram of a metal particle monitoring device according to an embodiment of the present disclosure.
FIG. 2 is a diagram for explaining the operation of the electrostatic capacity sensor of the metal particle monitoring device shown in FIG. 1.
FIG. 3 is a cross-sectional view for explaining an example of the electrostatic capacity sensor and the metal removal unit of the metal particle monitoring device shown in FIG. 1.
FIG. 4 is a cross-sectional view for explaining an example of the piping of the metal particle monitoring device shown in FIG. 1.
FIG. 5 is a cross-sectional view for explaining another example of the piping of the metal particle monitoring device shown in FIG. 1.
FIG. 6 is a perspective view for explaining a metal removal unit of a metal particle monitoring device according to another embodiment of the present disclosure.
FIG. 7 is a perspective view showing a state before the metal removal unit shown in FIG. 6 is inserted into the piping.
FIG. 8 is an exploded perspective view of the metal removal unit shown in FIG. 6.
FIG. 9 is a cross-sectional view for explaining a metal removal unit of a metal particle monitoring device according to yet another embodiment of the present disclosure.
FIG. 10 is a perspective view of the metal removal unit shown in FIG. 9.
FIG. 11 is a perspective view showing a state before the metal removal unit shown in FIG. 9 is inserted into the piping.
FIG. 12 is a flowchart for explaining a metal particle monitoring method according to one embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Below, embodiments of the present disclosure will be described with reference to the accompanying drawings.

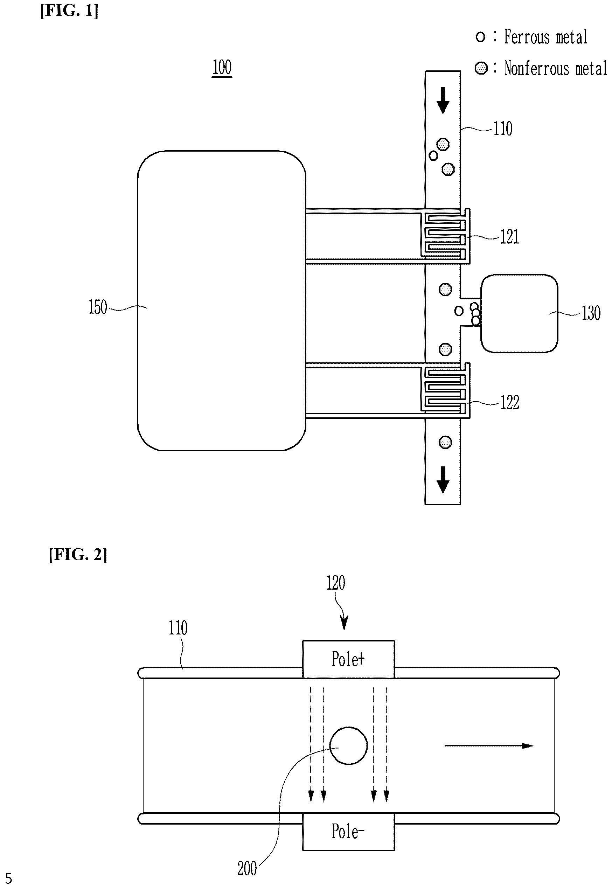

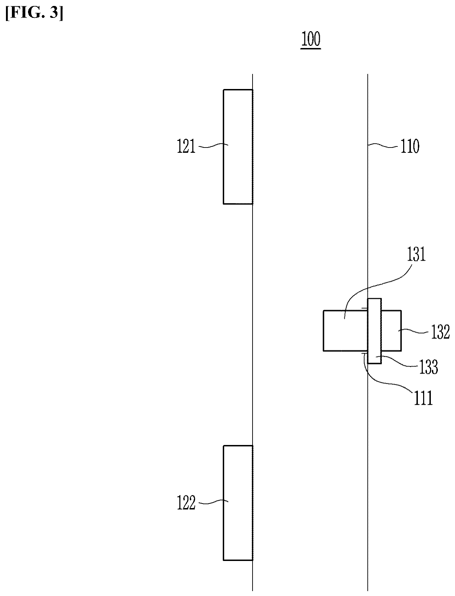

FIG. 1 is a schematic diagram of a metal particle monitoring device according to an embodiment of the present disclosure. FIG. 2 is a diagram for explaining the operation of the electrostatic capacity sensor of the metal particle monitoring device shown in FIG. 1. FIG. 3 is a cross-sectional view for explaining an example of the electrostatic capacity sensor and the metal removal unit of the metal particle monitoring device shown in FIG. 1.

Referring to FIGS. 1 to 3, the metal particle monitoring device 100 includes a piping 110 through which a fluid passes, a first sensor 121 that detects metal particles in the fluid passing through the piping 110, a metal removal unit 130 that is disposed on the downstream side of the first sensor 121 and removes prescribed metal particles in the fluid, and a second sensor 122 that is disposed on the downstream side of the metal removal unit 130, and detects metal particles after the prescribed metal particles are removed in the fluid.

The piping 110 may include an inlet port through which fluid flows in and an outlet port through which fluid is discharged. The inlet port and the outlet port may each be connected to a separate piping (not shown) through which the fluid can flow. As described below, the piping 110 may be formed with an opening part 111 through which at least a part of the metal removal unit 130 passes.

A fluid containing metal particles may be flowed into the interior of the piping 110 through the inlet port and then discharged to the outside through the outlet port. At this time, the prescribed metal particles included in the fluid flowed into the inside of the piping 110 may be removed by a metal removal unit 130 inserted into the piping 110. Here, the removal of the metal particles may mean that the metal particles are separated from the fluid. The fluid from which the prescribed metal particles are removed may be discharged to the outside through the outlet port.

As illustrated in FIG. 3, the piping 110 may extend in a vertical direction with respect to the ground. Since the piping 110 extends in a vertical direction with respect to the ground, metal particles in the fluid passing through the piping 110 may easily move within the piping 110 due to the influence of gravity. However, the extension direction of the piping 110 is not limited by those described above. For example, as described below, the piping 110 may extend slantly downward with respect to the ground. In addition, the embodiment shown in FIG. 3 only shows a part of the piping 110 in which the first sensor 121, the second sensor 122 and the metal removal unit 130 are disposed, and the remaining part of the piping 110 shown in FIG. 3 may extend in a horizontal direction, a vertical direction, an upward direction, a downward direction, or a combination thereof with respect to the ground.

The first sensor 121 and the second sensor 122 may detect metal particles in the fluid passing through the piping 110. The first sensor 121 and the second sensor 122 may be respectively disposed on the outer wall of the piping 110.

The first sensor 121 and the second sensor 122 may be electrostatic capacity sensors. Referring to FIG. 2, the electrostatic capacity sensor 120 supplies AC power between two poles, and detects the metal particles 200 through an electrical signal that changes when foreign substances 200 (e.g., metal particles) pass between them. For example, when metal particles 200 pass between two poles, the electrostatic capacity may change due to the metal particles 200, and the electrostatic capacity sensor 120 detects the metal particles 200 through an electrical signal corresponding to the change in electrostatic capacity that occurs when the metal particles 200 pass.

On the other hand, the electrostatic capacity sensor 120 can detect the metal particles 200 regardless of the type of the metal particles 200, but it cannot distinguish between ferrous metal particles and non-ferrous metal particles, which will be described later. The following describes a configuration in which the metal particle monitoring device 100 can distinguish between ferrous metal particles and nonferrous metal particles.

The first electrostatic capacity sensor 121 detects metal particles in the fluid that flows in and passes through the piping 110 before the prescribed metal particles are removed by the metal removal unit 130. More specifically, the first electrostatic capacity sensor 121 can measure the amount of metal particles passing through the first electrostatic capacity sensor 121 based on the change in electrostatic capacity, wherein the metal particles detected by the first electrostatic capacity sensor 121 include the prescribed metal particles that are removed by the metal removal unit 130 described below.

The second electrostatic capacity sensor 122 can measure the amount of metal particles passing through the second electrostatic capacity sensor 122 based on the change in electrostatic capacity in the similar manner to the first electrostatic capacity sensor 121, wherein the metal particles detected by the second electrostatic capacity sensor 122 are metal particles in the fluid passing through the piping 110 after the metal particles are removed by the metal removal unit 130.

The metal removal unit 130 can remove the metal particles. The prescribed metal particles removed by the metal removal unit 130 may include a ferromagnetic material. In some cases, the prescribed metal particles collected by the metal removal unit 130 may be at least one metal selected from iron (Fe), stainless steel (SUS), chromium (Cr), manganese (Mn), nickel (Ni), and cobalt (Co), or an alloy thereof. For example, the metal particles collected by the metal removal unit 130 may be ferromagnetic metal. For convenience of explanation, the metal particles collected by the metal removal unit 130 are referred to as ferrous metal particles, and the metal particles not collected by the metal removal unit 130 are referred to as nonferrous metal particles.

The metal removal unit 130 may include a magnetic member 131, a gripping member 132, and a sealing member 133. The magnetic member 131 is disposed inside the piping 110 so as to collect the ferrous metal particles. The magnetic member 131 has a prescribed magnetic force, and the ferrous metal particles contained in the fluid are attached to the magnetic member 131 by the magnetic force. Therefore, the ferrous metal particles in the fluid are removed by the magnetic member 131 of the metal removal unit 130. Meanwhile, the magnitude of the magnetic force of the magnetic member 131 can be variously modified and changed in accordance with the environment in which the present disclosure is realized. Since the magnetic member 131 is disposed inside the piping 110, it can come into contact with the fluid. The magnetic member 131 collects the prescribed ferrous metal particles and removes the prescribed ferrous metal particles contained in the fluid.

At least a part of the metal removal unit 130 may be detachably inserted into the piping 110 through the opening part 111. As a result, when the metal removal unit 130 is inserted into the piping 110 and a prescribed amount of ferrous metal particles are collected in the magnetic member 131, the metal removal unit 130 may be removed from the piping 110. As the metal removal unit 130 is removed from the piping 110, the magnetic member 131 can be easily washed, whereby the collected ferrous metal particles can be easily removed from the magnetic member 131. Meanwhile, the amount of ferrous metal particles collected by the magnetic member 131 can be variously modified and changed in accordance with the environment in which the present disclosure is realized.

The gripping member 132 is a member that protrudes outside the piping 110 when the magnetic member 131 is inserted into the piping 110. A user can grip the gripping member 132 protruding outside the piping 110 and easily remove the metal removal unit 130 from the piping 110.

The sealing member 133 is disposed between the gripping member 132 and the magnetic member 131 and seals the opening part 111 of the piping 110. The sealing member 133 can prevent the fluid inside the piping 110 from leaking outside the piping 110.

The sealing member 133 may be an elastically deformable material. The sealing member 133 may be made, for example, from an elastically deformable material, such as rubber. However, the material of the sealing member 133 is not limited by those described above. For example, the sealing member 133 may be an elastically deformable material such as natural rubber, synthetic rubber, thermoplastic elastic resin, etc.

When the metal removal unit 130 is inserted into the piping 110, it may be forcibly fitted into the opening part 111 of the piping 110. Since the metal removal unit 130 is forcibly fitted into the piping 110, it is not easily separated from the piping 110. Therefore, the metal removal unit 130 can be prevented from being removed from the piping 110 by the pressure of the fluid flowing through the piping 110. Meanwhile, the method by which the metal removal unit 130 is fixed to the piping 110 is not limited by those described above. For example, the metal removal unit 130 may be fixed to the piping 110 by a method such as screw coupling.

The metal particle monitoring device 100 may include a processor 150 that calculates the amount of ferrous metal particles and nonferrous metal particles. The processor 150 may include, for example, a micro controller unit (MCU). The processor 150 may be provided inside the metal particle monitoring device 100, or may be provided separately outside the metal particle monitoring device 100 and may communicate remotely with the metal particle monitoring device 100. The form of the processor 150 may be variously modified or changed in accordance with the environment in which the present disclosure is realized.

As described above, the processor 150 may receive an electrical signal regarding the metal particles detected from the first electrostatic capacity sensor 121 and the second electrostatic capacity sensor 122. As described above, the processor 150 receives an electrical signal from the first electrostatic capacity sensor 121 regarding the amount of ferrous metal particles and nonferrous metal particles in the fluid passing through the piping 110. Further, the processor 150 receives an electrical signal from the second electrostatic capacity sensor 122 regarding the amount of nonferrous metal particles passing through the piping 110 after the ferrous metal particles are removed by the metal removal unit 130. The processor 150 can calculate the amount of ferrous metal particles and nonferrous metal particles based on the amount of metal particles detected from the first electrostatic capacity sensor 121 and the second electrostatic capacity sensor 122. That is, the processor 150 can determine the amount of metal particles sensed by the second electrostatic capacity sensor 122 as the amount of nonferrous metal particles. In addition, the processor 150 calculates the difference between the amount of metal particles detected by the first electrostatic capacity sensor 121 and the amount of metal particles detected by the second electrostatic capacity sensor 122 to calculate the amount of ferrous metal particles.

Accordingly, the metal particle monitoring device 100 according to an embodiment of the present disclosure can selectively detect the amount of ferrous metal and nonferrous metal in the fluid flowing into the piping 110 based on the amount of metal particles detected by the first electrostatic capacity sensor 121 and the second electrostatic capacity sensor 122.

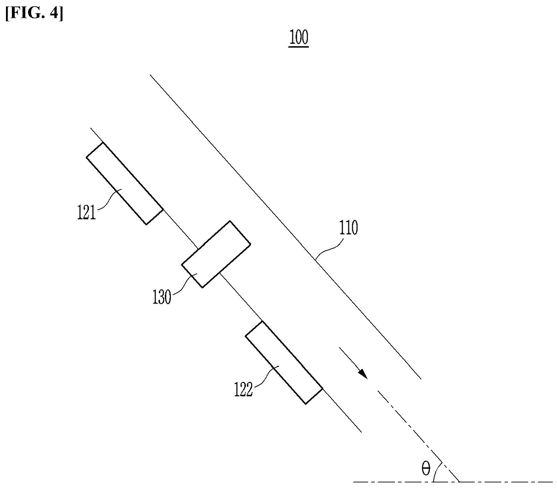

FIG. 4 is a cross-sectional view for explaining an example of the piping of the metal particle monitoring device shown in FIG. 1.

Referring to FIG. 4, the piping 110 may be extended slantly downward at a prescribed angle(θ) with respect to the ground. Meanwhile, the embodiment shown in FIG. 4 shows only a part of the piping 110 in which the first electrostatic capacity sensor 121, the second electrostatic capacity sensor 122 and the metal removal unit 130 are disposed, and the remaining part of the piping 110 shown in FIG. 4 may extend in a horizontal direction, a vertical direction, an upward direction, a downward direction, or a combination thereof with respect to the ground.

At this time, the first electrostatic capacity sensor 121, the second electrostatic capacity sensor 122, and the metal removal unit 130 may be disposed on a side of the piping 110 facing the ground. As the first electrostatic capacity sensor 121 and the second electrostatic capacity sensor 122 are closer to the metal particles, the accuracy of the measurement may be higher. As the metal removal unit 130 is also closer to the ferrous metal particles, the magnetic force of the magnetic member 131 acting on the ferrous metal particles may be stronger. According to the arrangement described above, the metal particles passing through the piping 110 can flow as close as possible to the first electrostatic capacity sensor 121, the second electrostatic capacity sensor 122, and the metal removal unit 130 due to the influence of gravity. Therefore, the accuracy of the measurement of the ferrous metal particles and nonferrous metal particles of the metal particle monitoring device 100 can be increased.

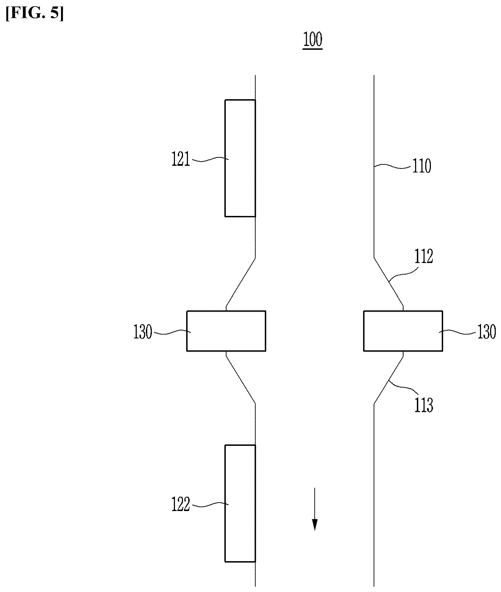

FIG. 5 is a cross-sectional view for explaining another example of the piping of the metal particle monitoring device shown in FIG. 1.

Referring to FIG. 5, the piping 110 includes a spreading part 112 having a cross-sectional shape that widens toward the metal removal unit 130 on the downstream side of the first electrostatic capacity sensor 121, and a converging part 113 having a cross-sectional shape that narrows toward the second electrostatic capacity sensor 122 on the downstream side of the metal removal unit 130.

When the cross-section gradually widens from the spreading part 112 toward the metal removal unit 130, the speed of the fluid flowing in the spreading part 112 may decrease. As a result, since the contact time of the fluid with the metal removal unit 130 may increase, the collection efficiency of the iron metal particles of the metal removal unit 130 may increase. The speed of the fluid passing through the metal removal unit 130 may increase again in the converging part 113.

The metal removal unit 130 includes a plurality of metal removal units 130, and the plurality of metal removal units 130 may be disposed spaced apart at a prescribed interval from each other. The portion of the piping 110 in which the metal removal unit 130 is disposed is the portion with the largest diameter, and a single metal removal unit 130 alone may not be sufficient to exert a magnetic force on the inside of the piping 110. For this reason, the multiple metal removal units 130 are disposed along the outer surface of the piping 110 at a prescribed interval from each other, thereby allowing magnetic force to act on the inside of the piping 110 as a whole.

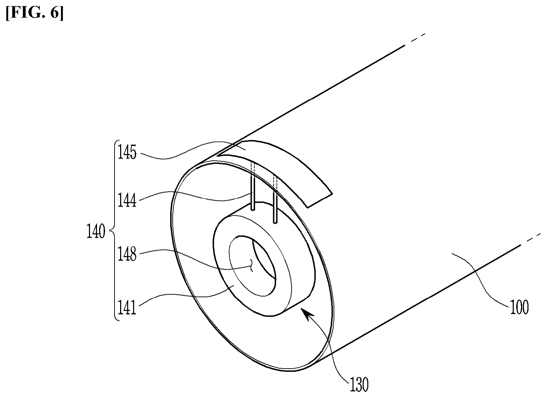

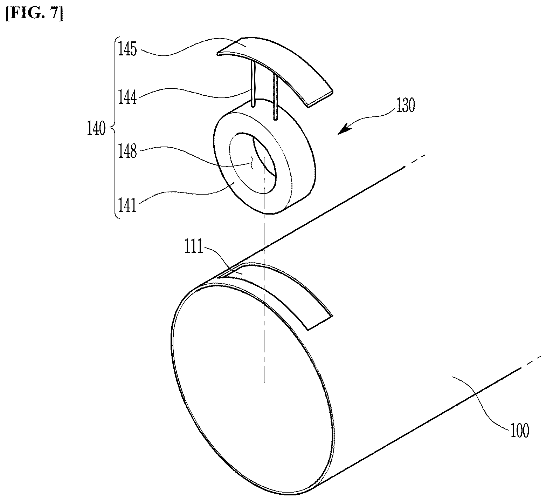

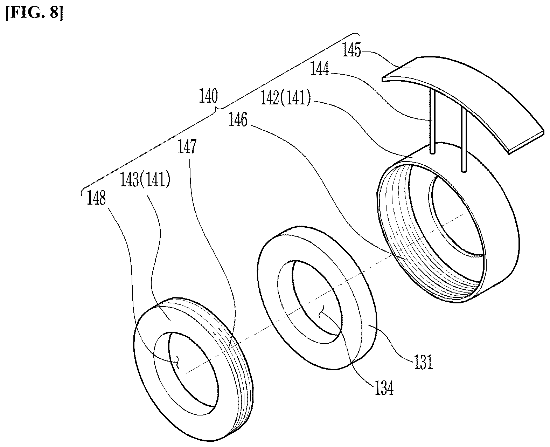

FIG. 6 is a perspective view for explaining a metal removal unit of a metal particle monitoring device according to another embodiment of the present disclosure. FIG. 7 is a perspective view showing a state before the metal removal unit shown in FIG. 6 is inserted into the piping. FIG. 8 is an exploded perspective view of the metal removal unit shown in FIG. 6.

Referring to FIGS. 6 to 8, the metal removal unit 130 may include a position fixing member 140 that locates the magnetic member 131 at the center of the piping 110. The position fixing member 140 may include a housing 141 that houses the magnetic member 131, a cover member 145 that closes the opening part 111 of the piping 110, and a fixing member 144 that connects between the housing 141 and the cover member 145, and fixes the position of the housing 141.

The housing 141 includes a first housing 142, and a second housing 143 separably coupled with the first housing 142. In this case, at least one of the first housing 142 and the second housing 143 may be connected to the cover member 145 by the fixing member 144. Meanwhile, the housing 141 can be included in an embodiment of the present disclosure as long as it has a structure that can house a magnetic member 131 therein. For example, the housing 141 may be an elastically deformable integrated structure such as silicone or rubber, and the magnetic member 131 may be housed inside the housing 141 through a deformable groove formed in the housing 141.

Since the magnetic member 131 is housed inside the housing 141, the magnetic member 131 may not come into direct contact with the fluid in the piping 110. This can prevent the magnetic member 131 from being corroded by the fluid. The housing 141 may be made of a nonmetallic material. Even if wear or corrosion occurs in the housing 141, the housing 141 is made of a nonmetallic material, it is possible to prevent new metal particles from being generated inside the piping 110. Therefore, it is possible to prevent the magnetic member 131 from affecting the measurements of the first electrostatic capacity sensor 121 and the second electrostatic capacity sensor 122.

Further, when a prescribed amount of ferrous metal particles are collected in the magnetic member 131, the user can remove the metal removal unit 130 from the piping 110. At this time, after the metal removal unit 130 is removed from the piping 110, the housing 141 can be separated into the first housing 142 and the second housing 143, so that the user can remove only the magnetic member 131 from the housing 141. As a result, the ferrous metal particles attached to the outer surface of the housing 141 due to the magnetism of the magnetic member 131 can be easily removed from the housing 141 as the magnetism of the magnetic member 131 disappears.

Therefore, the metal particle monitoring device 100 according to the embodiments of the present disclosure does not remove ferrous metal particles directly attached to the magnetic member 131, but separates the magnetic member 131 from the housing 141 to remove ferrous metal particles from the nonmagnetic housing 141. Therefore, the user can conveniently wash the ferrous metal particles collected by the metal removal unit 130.

In order to detachably couple the first housing 142 and the second housing 143, a female screw part 146 may be formed on the inner surface of one of the first housing 142 and the second housing 143, and a male screw part 147 that engages the female screw part 146 may be formed on the outer surface of the other of the first housing 142 and the second housing 143. For example, as illustrated in FIG. 8, a female screw part 146 may be formed on the inner surface of the first housing 142, and a male screw part 147 may be formed on the outer surface of the second housing 143. Meanwhile, the method of coupling the first housing 142 and the second housing 143 is not limited to those described above, and may be modified and changed by various joining means.

The fixing member 144 may fix the housing 141 to a prescribed position within the piping 110. For example, the fixing member 144 may allow the housing 141 to locate at the center of the piping 110. When the housing 141 is located at the center of the piping 110, a bending moment occurs in the fixing member 144 due to the resistance of the fluid flowing through the piping 110. The fixing member 144 may be made of a material having rigidity so that bending due to such bending moment does not occur. Preferably, the fixing member 144 may be a nonmetallic material having rigidity.

The cover member 145 is a member for closing the opening part 111 of the piping 110. Although not shown in FIGS. 6 to 8, the cover member 145 may be applied with various sealing means, such as an elastically deformable member, to seal the opening part 111 of the piping 110.

Meanwhile, the cross section of the magnetic member 131 may have a shape corresponding to the cross section of the piping 110. For example, as shown in FIGS. 6 to 8, when the piping 110 has a circular cross-sectional shape, the magnetic member 131 may also have a circular cross-section shape. Since the magnetic member 131 has the same cross-sectional shape as the cross-sectional shape of the piping 110 and also is located at the center of the piping 110 by the position fixing part 140, the area where the magnetic member 131 comes into contact with the fluid flowing in the piping 110 is increased. Therefore, the metal removal unit 130 can effectively collect ferrous metal particles from the fluid passing through the piping 110.

At this time, a through hole 134 through which a fluid passes may be formed in the magnetic member 131. The through hole 134 of the magnetic member 131 may also have a shape corresponding to the cross-sectional shape of the piping 110. When the through hole 134 is formed in the magnetic member 131, the area resisting the flow of the fluid passing through the piping 110 can be reduced, so that the flow of the fluid passing through the piping 110 can be maintained smoothly.

The housing 141 may have a shape corresponding to the shape of the magnetic member 131. For example, as shown in FIGS. 6 to 8, the magnetic member 131 has a circular shape with a through hole 134 formed therein, i.e., a ring-shaped structure. Accordingly, the housing 141 may have the same ring-shaped structure as the magnetic member 131. As described above, the fluid in the piping 110 passes through a housing hole 148, so that the flow of the fluid passing through the piping 110 can be maintained smoothly.

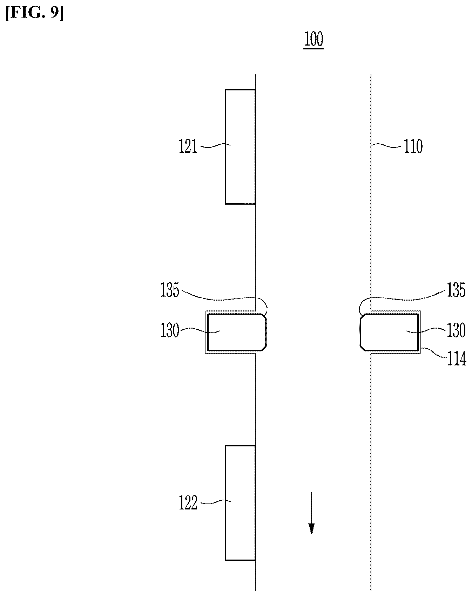

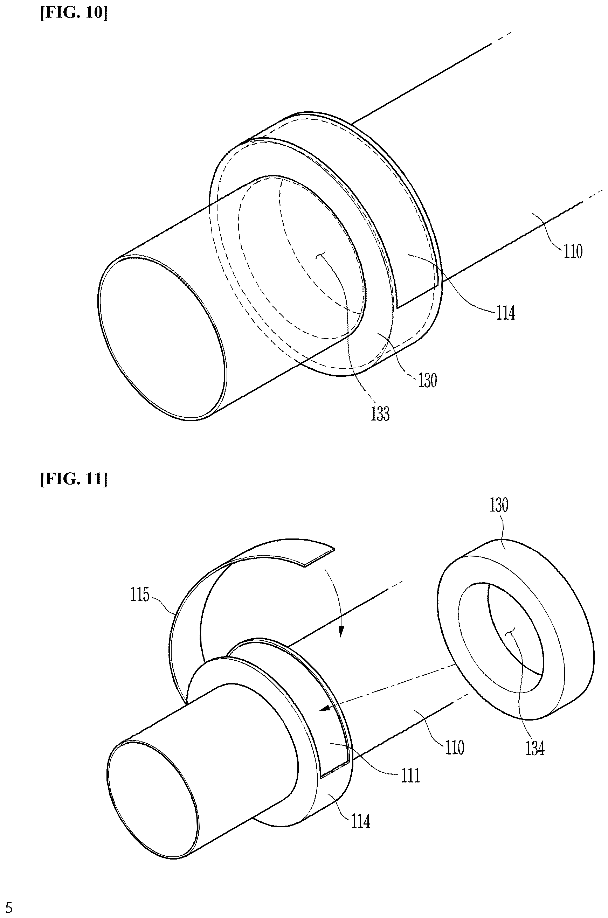

FIG. 9 is a cross-sectional view for explaining a metal removal unit of a metal particle monitoring device according to yet another embodiment of the present disclosure. FIG. 10 is a perspective view of the metal removal unit shown in FIG. 9. FIG. 11 is a perspective view showing a state before the metal removal unit shown in FIG. 9 is inserted into the piping.

Referring to FIGS. 9 to 11, the piping 110 may include a housing space 114 formed to protrude outward so that the metal removal unit 130 can be housed therein, and a piping cover member 115 that opens and closes the opening part 111 communicating with the housing space 114. The metal removal unit 130 may be housed in the housing space 114 and disposed inside the piping 110. Meanwhile, the shapes of the metal removal unit 130, the housing space 114, and the piping cover member 115 shown in FIGS. 9 to 11 are merely illustrative for the convenience of explanation, and the shapes are not limited by the shapes shown in the figures. For example, both the metal removal unit 130 and the housing space 114 may have a square cross-sectional shape.

The housing space 114 may be formed to protrude outward from the piping 110 in order to house the metal removal unit 130 inside the piping 110. Since the housing space 114 communicates with the inside of the piping 110 through which fluid passes, it may come into contact with the fluid when the metal removal unit 130 is housed in the housing space 114. Since the housing space 114 is formed to protrude outward from the piping 110, the metal removal unit 130 may be fixed to the piping 110 without an additional fixing means when the metal removal unit 130 is housed in the housing space 114.

The piping cover member 115 may operate by a method of rotating between a first position that opens the opening part 111 and a second position that closes the opening part 111. However, the method by which the piping cover member 115 opens and closes the opening part 111 is not limited by those described above, and various modifications and changes may be applied. For example, the piping cover member 115 may slidably move between a first position that opens the opening part 111 and a second position that closes the opening part 111. Meanwhile, although not shown in FIGS. 9 to 11, the piping cover member 115 may apply various sealing means, such as including an elastically deformable member to seal the opening part 111 of the piping 110.

The metal removal unit 130 may include a through hole 134 having a cross-sectional shape corresponding to the cross-sectional shape of the piping 110. When the metal removal unit 130 is disposed in the housing space 114 of the piping 110, the fluid passing through the piping 110 passes through the through hole 134. At this time, the diameter of the through hole 134 of the metal removal unit 130 may be smaller than or equal to the diameter of the piping 110.

When the diameter of the through hole 134 of the metal removal unit 130 is equal to the diameter of the piping 110, the flow of the fluid passing through the piping 110 may not be affected by the metal removal unit 130.

When the diameter of the through hole 134 of the metal removal unit 130 is smaller than the diameter of the piping 110, the flow of the fluid passing through the piping 110 may be affected by the metal removal unit 130. For example, turbulence may be generated by the metal removal unit 130 at the portion where the metal removal unit 130 protrudes into the inside of the piping 110, and may hinder the smooth flow of the fluid. Therefore, in order to minimize the influence of the metal removal unit 130 on the flow of the fluid in the piping 110, the metal removal unit 130 may include a chamfered part 135 formed on the edge of the portion where the metal removal unit 130 protrudes into the inside of the piping 110.

Meanwhile, the speed of the fluid flowing through the piping 110 can be variously modified and changed in accordance with the process environment, the type of fluid, the amount of metal particles, etc. In some cases, the fluid may flow at a constant speed in the piping 110, or stop in the piping 110, or flow at an arbitrary speed in the piping 110, or flow by a combination of these while having a prescribed profile in the piping 110.

For example, the fluid flowing in the piping 110 of the metal particle monitoring device 100 according to the above-mentioned embodiments may be air inside the manufacturing facility of the secondary battery. For example, air inside the manufacturing facility of the secondary battery may be flowed in from the outside of the metal particle monitoring device 100 through a piping not shown. The metal particle monitoring device 100 is capable of monitoring metal particles contained in the air.

For example, the metal particles contained in the air inside the manufacturing facility of the secondary battery may be iron, stainless steel, copper, zinc, etc. As described above, the metal particle monitoring device 100 can collect ferrous metal particles through the metal removal unit 130, so that ferrous metal particles such as iron and stainless steel are removed by the metal removal unit 130 after passing through the first electrostatic capacity sensor 121. Therefore, the first electrostatic capacity sensor 121 can detect the total amount of metal particles such as iron, stainless steel, copper, zinc, etc., and the second electrostatic capacity sensor 122 can detect the amount of nonferrous metal particles such as copper, zinc, etc., except for ferrous metal particles such as iron and stainless steel.

If metal particles are included in the electrode during the electrode manufacturing process, they may grow during the operation of the lithium secondary battery, thereby causing leakage current between the positive and negative electrodes and causing low voltage defects in the lithium secondary battery. Therefore, monitoring of metal particles in the electrode manufacturing process is important. For example, the metal particle monitoring device 100 can be used in a cutting process, welding process, etc., where a lot of metal particles may be generated in the electrode manufacturing process. In addition, the metal particle monitoring device 100 can be used in a winding device that winds a substrate, a lamination device that bonds an electrode and a separator, etc. The metal particle monitoring device 100 according to the above-mentioned embodiments can selectively detect ferrous metal and nonferrous metal foreign substances in the electrode manufacturing process to understand generation factors of foreign substances. However, the process and device in which the metal particle monitoring device 100 according to the embodiments of the present disclosure can be used are not limited by those described above, and can be used in all processes that require monitoring the concentration of metal particles generated by manufacturing equipment in a battery production line.

The metal particle monitoring device 100 according to the above-mentioned embodiments can monitor metal foreign substances contained in the air inside the manufacturing facility of the secondary battery to predict defective cells that may occur in the secondary battery manufacturing process in advance. In addition, since the removal of ferrous metal is possible through the magnetic member 131 in the process of monitoring metal foreign substances, the reduction of metal foreign substances in the air inside the manufacturing facility of the secondary battery can be achieved more effectively.

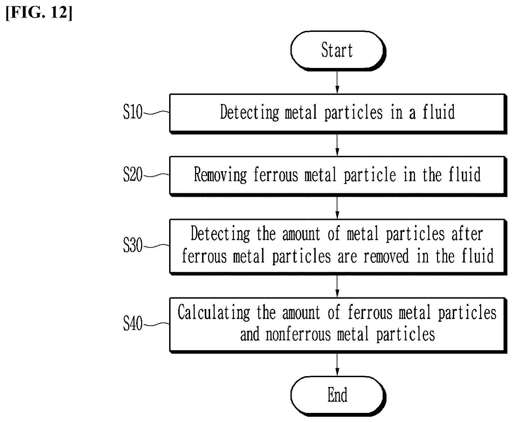

FIG. 12 is a flowchart for explaining a metal particle monitoring method according to one embodiment of the present disclosure.

The metal particle monitoring method can be performed using the metal particle monitoring device 100 described above. However, since the specific explanation of each step of the metal particle monitoring method described below has been given in the metal particle monitoring device 100 with reference to FIGS. 1 to 11, the overlapping contents will be omitted.

Referring to FIG. 12, the metal particle monitoring method may include a step (S10) of detecting the amount of metal particles in a fluid passing through a piping 110, a step (S20) of removing prescribed metal particles in the fluid, a step (S30) of detecting the amount of metal particles after the prescribed metal particles are removed in the fluid, and a step (S40) of calculating the amount of the prescribed metal particles and the amount of metal particles excluding the prescribed metal particles.

In the step S10, the metal particle monitoring method can detect the amount of metal particles in the fluid passing through the piping 110 by the first electrostatic capacity sensor 121. At this time, the metal particles in the fluid passing through the piping 110 may include both ferrous metal particles and nonferrous metal particles.

In the step S20, the ferrous metal particles in the fluid may be removed by the metal removal unit 130. The metal removal unit 130 collects the ferrous metal particles by magnetic force, thereby removing the ferrous metal particles in the fluid passing through the piping 110.

In the step S30, the metal particle monitoring method can detect the amount of non-ferrous metal particles in the fluid passing through the piping 110 by the second electrostatic capacity sensor 122. At this time, the metal particles in the fluid passing through the piping 110 where the second electrostatic capacity sensor 122 is disposed may include only nonferrous metal particles since the ferrous metal particles are removed.

In the step S40, the processor 150 can calculate the amount of ferrous metal particles and nonferrous metal particles based on the amount of metal particles detected from the first electrostatic capacity sensor 121 and the second electrostatic capacity sensor 122. For example, the processor 150 can calculate the amount of nonferrous metal particles through the amount of metal particles detected from the second electrostatic capacity sensor 122, and calculate the difference between the amount of metal particles detected from the first electrostatic capacity sensor 121 and the amount of metal particles detected from the second electrostatic capacity sensor 122, thereby calculating the amount of ferrous metal particles.

While preferred embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: metal particle monitoring device
110: piping
111: opening part
112: spreading part
113: converging part
114: housing space
115: piping cover member
120: electrostatic capacity sensor
121: first electrostatic capacity sensor (first sensor)
122: second electrostatic capacity sensor (second sensor)
130: metal removal unit
131: magnetic member
132: gripping member
133: sealing member
134: through hole
135: chamfered part
140: position fixing member
141: housing
142: first housing
143: second housing
144: fixing member
145: cover member
146: female screw part
147: male screw part
148: housing hole
150: processor
200: metal particles

## Claims

1. A metal particle monitoring device comprising:
a piping through which a fluid passes;
a first sensor that detects metal particles in the fluid passing through the piping;
a metal removal unit that is disposed on a downstream side of the first sensor and removes prescribed metal particles in the fluid; and
a second sensor that is disposed on the downstream side of the metal removal unit, and detects the metal particles after the prescribed metal particles are removed in the fluid.

2. The metal particle monitoring device according to claim 1,
wherein the first sensor and the second sensor are electrostatic capacity sensors.

3. The metal particle monitoring device according to claim 1,
wherein the piping comprises an opening part through which at least a part of the metal removal unit penetrates, and
the metal removal unit is detachably inserted into the piping through the opening part.

4. The metal particle monitoring device according to claim 3,
wherein the metal removal unit comprises a magnetic member disposed inside the piping to collect the prescribed metal particles.

5. The metal particle monitoring device according to claim 4,
wherein the metal removal unit further comprises:
a gripping member that protrudes outside the piping when the magnetic member is inserted into the piping; and
a sealing member that is disposed between the gripping member and the magnetic member and seals the opening part of the piping.

6. The metal particle monitoring device according to claim 4,
wherein the metal removal unit further comprises a position fixing part that allows the magnetic member to be located at the center of the piping.

7. The metal particle monitoring device according to claim 6,
wherein the position fixing part comprises:
a housing that houses the magnetic member;
a cover member that closes the opening part of the piping; and
a fixing member that connects between the housing and the cover member, and fixes a position of the housing.

8. The metal particle monitoring device according to claim 7,
wherein the housing comprises:
a first housing; and
a second housing separably coupled with the first housing,
wherein at least one of the first housing and the second housing is connected to the cover member by the fixing member.

9. The metal particle monitoring device according to claim 8,
wherein one of the first housing and the second housing comprises a female screw part formed on an inner surface, and
the other of the first housing and the second housing comprises a male screw part formed on an outer surface and engaged with the female screw part.

10. The metal particle monitoring device according to claim 7,
wherein the magnetic member has a cross-sectional shape that corresponds to a shape of the piping.

11. The metal particle monitoring device according to claim 10,
wherein the magnetic member comprises a through hole through which the fluid passes.

12. The metal particle monitoring device according to claim 11,
wherein the housing has a shape corresponding to a shape of the magnetic member.

13. The metal particle monitoring device according to claim 3,
wherein the piping comprises:
a housing space formed to protrude outward so that the metal removal unit can be housed therein; and
a piping cover member that opens and closes the opening part,
wherein the metal removal unit is housed in the housing space and disposed inside the piping.

14. The metal particle monitoring device according to claim 13,
wherein the metal removal unit comprises a through hole having a cross section corresponding to the cross sectional shape of the piping, and
when the metal removal unit is disposed in the housing space, the fluid passes through the through hole.

15. The metal particle monitoring device according to claim 14,
wherein a diameter of the through hole is smaller than or equal to a diameter of the piping.

16. The metal particle monitoring device according to claim 1,
wherein the piping extends in a vertical direction with respect to a ground.

17. The metal particle monitoring device according to claim 1,
wherein the piping extends slantly downward with respect to a ground.

18. The metal particle monitoring device according to claim 17,
wherein the first electrostatic capacity sensor, the second electrostatic capacity sensor, and the metal removal unit are disposed on a side of the piping that faces the ground.

19. The metal particle monitoring device according to claim 1,
wherein the piping comprises:
a spreading part having a cross-sectional shape that widens toward the metal removal unit on the downstream side of the first electrostatic capacity sensor; and
a converging part having a cross-sectional shape that narrows toward the second electrostatic capacity sensor on the downstream side of the metal removal unit.

20. The metal particle monitoring device according to claim 19,
wherein the metal removal unit comprises a plurality of metal removal units, and
the plurality of metal removal units are disposed spaced apart from each other at prescribed intervals.

21. The metal particle monitoring device according to claim 1,
wherein the fluid is air inside a manufacturing facility of a secondary battery.

22. The metal particle monitoring device according to claim 21,
wherein the metal particles are formed from at least one metal selected from iron, stainless steel, copper and zinc, or an alloy thereof.

23. A metal particle monitoring method comprising the steps of:
detecting an amount of metal particles in a fluid passing through a piping;
removing prescribed metal particles in the fluid; and
detecting the amount of the metal particles after the prescribed metal particles are removed in the fluid.
